# EUROPÄISCHE PATENTANMELDUNG

(11) **EP 3 663 738 A2**
(43) Veröffentlichungstag der Anmeldung: **10.06.2020**
(21) Anmeldenummer: 19213922.8
(22) Anmeldetag: 05.12.2019
(51) Int. Cl.: G01M 3/18, G01M 3/40, F16L 9/133, F16L 11/127, F17D 5/06

(54) **ANORDNUNG UMFASSEND EINE ROHRLEITUNG SOWIE EINE EINRICHTUNG ZU DEREN ÜBERWACHUNG**

(30) Priorität: 06.12.2018 DE 202018106981 U
(71) Anmelder: egeplast international GmbH, 48268 Greven (DE)
(72) Erfinder: DEN OUDEN, Dirk, 48282 Emsdetten (DE)
(74) Vertreter: Fritz & Brandenburg Patentanwälte

(57) **Zusammenfassung**

Die vorliegende Erfindung betrifft eine Anordnung umfassend eine Rohrleitung (10) mit einer Einrichtung zur Überwachung der Rohrleitung auf Beschädigung oder Leckagen, umfassend einen ersten sich in der Rohrleitung etwa in Längsrichtung erstreckenden elektrischen Leiter (13 a) und einen zweiten sich in der Rohrleitung etwa in Längsrichtung erstreckenden elektrischen Leiter (13 b), eine äußere Schutzmantelschicht (12), die die elektrischen Leiter zur Umgebung hin elektrisch isoliert, eine Spannungsquelle, um die elektrischen Leiter mit einer Spannung zu beaufschlagen sowie eine Messvorrichtung, mittels derer ein Stromfluss durch die elektrischen Leiter und/oder deren elektrischer Widerstand messbar ist, wobei innerhalb der Rohrleitung wenigstens zwei elektrische Leiter (13 a, 13 b) angeordnet sind, welche aus Materialien mit jeweils unterschiedlichen spezifischen elektrischen Widerständen bestehen, wobei erfindungsgemäß ein erster elektrischer Leiter (13 a) einen Draht mit einer durchgehenden elektrischen Isolierung umfasst und ein zweiter elektrischer Leiter (13 b) einen Draht mit einer elektrischen Isolierung umfasst, wobei die elektrische Isolierung des zweiten Leiters (13 b) an mehreren Stellen, jeweils in definierten Abständen voneinander durchbrochen, insbesondere perforiert ist und wobei die Rohrleitung (10) ein Kernrohr (11) mit mindestens einer tragenden Schicht aus Kunststoff umfasst.

## Beschreibung

Die vorliegende Erfindung betrifft eine Anordnung umfassend eine Rohrleitung mit einer Einrichtung zur Überwachung der Rohrleitung auf Beschädigung oder Leckagen, umfassend einen ersten sich in der Rohrleitung etwa in Längsrichtung erstreckenden elektrischen Leiter und einen zweiten sich in der Rohrleitung etwa in Längsrichtung erstreckenden elektrischen Leiter, eine äußere Schutzmantelschicht, die die elektrischen Leiter zur Umgebung hin elektrisch isoliert, eine Spannungsquelle, um die elektrischen Leiter mit einer Spannung zu beaufschlagen sowie eine Messvorrichtung, mittels derer ein Stromfluss durch die elektrischen Leiter und/oder deren elektrischer Widerstand messbar ist, wobei innerhalb der Rohrleitung wenigstens zwei elektrische Leiter angeordnet sind, welche aus Materialien mit jeweils unterschiedlichen spezifischen elektrischen Widerständen bestehen.

In der DE 198 41 317 C wird eine Leckanzeigeeinrichtung für mehrschichtige Kunststoffrohre beschrieben, bei der in die Kunststoffwandung des Rohrs eine metallisch leitende Schicht eingebunden ist, die als eine erste Stromelektrode dient. In der Umgebung des Kunststoffrohres ist eine zweite Stromelektrode in einem elektrisch leitenden Material angeordnet, welche zusammen mit der ersten Stromelektrode in einen Stromkreis mit einer Stromquelle und einer Strommesseinrichtung eingebunden ist. Außerdem sind neben dem Kunststoffrohr noch zwei elektrische Potentialelektroden angeordnet, die über eine Spannungsmesseinrichtung verbunden sind. Eine Auswerteeinheit ermittelt den scheinbaren spezifischen Widerstand aus dem mit der Strommesseinrichtung gemessenen Strom und der mit der Spannungsmesseinrichtung gemessenen Spannung. Die als erste Elektrode verwendete elektrisch leitende Schicht liegt hier als Flächenelektrode vor und kann aus Aluminium bestehen. Im Falle einer Leckage im Rohr fließt ein Strom zu der zweiten Elektrode. Außerdem nimmt bei einer Leckage der scheinbare spezifische Widerstand zwischen den beiden elektrischen Potentialelektroden ab. Dieses bekannte Verfahren mit zwei Messeinrichtungen ist vergleichsweise aufwändig.

Die WO 2004/038357 A1 beschreibt ein System mit Sensoren zur Detektion und Ortung einer Leckage. Hier werden zwei niederohmige Leiter verwendet, die als gedruckte Schaltung auf einer nicht leitenden flexiblen Grundfläche angeordnet sind und parallel zueinander verlaufen. Die Leiter werden von einer flüssigkeitsdichten Abdeckschicht mit geringer Leitfähigkeit überdeckt. Wenn die Abdeckschicht bei einer Leckage in einem Teilbereich benetzt wird, ändert sich in diesem Bereich der Widerstandswert und die Widerstandsänderung kann für die Detektion und Ortung gemessen werden. Der Verlauf der beiden niederohmigen Leiter ist kammförmig und diese sind ineinander verschachtelt. Nachteilige ist, dass bei diesem bekannten System die verwendeten Leiter vergleichsweise aufwändig in der Herstellung und daher kostspielig sind.

Aus der DE 10 2007 038 297 A1 ist es bekannt, eine größere Rohrleitung aus Kunststoff zusammen mit einer kleineren Leitung oder einem Kabel im Erdreich zu verlegen. Um dies zu ermöglichen, wird die kleinere Leitung auf dem Kernrohr der größeren Rohrleitung in Längsrichtung verlegt und danach werden beide Rohre von einer gemeinsamen Mantelschicht oder Schutzschicht umhüllt, so dass danach beide Rohre quasi eine Rohreinheit oder Rohr-Kabel-Einheit bilden, die sich grabenlos im Erdreich verlegen lässt.

Die DE 195 19 650 C2 beschreibt ein Verfahren zur Ortung undichter Stellen in Rohrleitungen, insbesondere für die Übertragung von Fernwärme. Bei einem Messverfahren mit einer Widerstandsbrücke werden zwei elektrische Leiter verwendet, von denen der eine aus Nickelchrom (NiCr) besteht und relativ hochohmig ist, wobei der Ohmsche Widerstand zwischen diesem Leiter und einem zweiten niederohmigen Leiter gemessen wird und nach dem Prinzip des unbelasteten Spannungsteilers die Lage der Fehlerstelle ermittelt wird. Das Verfahre eignet sich für die Ortung weniger feuchter Fehlerstellen an einer Rohrleitung, hat aber eine Einsatzgrenze bei sehr feuchten Fehlerstellen.

In der DE 33 09 704 A1 wird eine Vorrichtung zur laufenden Überwachung eines wärmeisoliierten Leitungsrohres beschrieben, bei der ein hochohmiger Leiter aus einer Nickel-Chrom-Legierung verwendet wird und zusätzliche niederohmige Messschleifen aus Kupfer vorgesehen sind. Es handelt sich dabei um blanke Leiter ohne Isolierung. Die Messschleifen sind ringförmig und beabstandet und erstrecken sich nicht in Längsrichtung der Rohrleitung.

Die DE 10 2012 103 747 A1 beschreibt eine Leckage-Überwachungsvorrichtung für Fernwärmerohre, bei der zwei Drähte in die Wärmeisolierung eingelassen sind, wobei der eine Draht aus Kupfer besteht und der andere Draht verzinnt ist, so dass die beiden Drähte unterschiedliche Widerstände haben. Hier wird ein Innenrohr aus Metall verwendet und die beiden Leiter, die zu einer Schleife verbunden sind, sind nicht elektrisch isoliert, das heißt es handelt sich um blanke Leiter. Zusätzlich wird bei dieser Vorrichtung ein Referenzisolationswiderstand verwendet, der über einen fernbedienbaren Schalter wahlweise an eine Widerstandsmesseinheit oder an zwei Messanschlüsse angekoppelt wird. Die bekannte Vorrichtung eignet sich nur zur Erkennung von Undichtigkeiten an der Fernwärmeleitung, nicht aber zur Ortung einer Leckagestelle.

Die Aufgabe der vorliegenden Erfindung besteht darin, eine Anordnung umfassend eine Rohrleitung mit einer Einrichtung zur Überwachung der Rohrleitung auf Leckagen mit den Merkmalen der eingangs genannten Gattung zur Verfügung zu stellen, welche konstruktiv einfach aufgebaut ist und sowohl eine effektive Überwachung der Rohrleitung auf Leckagen ermöglicht als auch eine Ortung der Stelle, an der die Leckage aufgetreten ist.

Die Lösung dieser Aufgabe liefert eine Anordnung der eingangs genannten Gattung mit den Merkmalen des Anspruchs 1.

Erfindungsgemäß ist vorgesehen, dass ein erster elektrischer Leiter einen Draht mit einer durchgehenden elektrischen Isolierung umfasst und ein zweiter elektrischer Leiter einen Draht mit einer elektrischen Isolierung umfasst, wobei die elektrische Isolierung des zweiten Leiters an mehreren Stellen, jeweils in definierten Abständen voneinander durchbrochen, insbesondere perforiert ist und dass die Rohrleitung in Kernrohr mit mindestens einer tragenden Schicht aus Kunststoff umfasst.

Die vorliegende Erfindung bezieht sich somit auf Rohrleitungen, die zumindest in wesentlichen Bereichen aus Kunststoff bestehen. Im Gegensatz dazu weisen Rohre für den Transport von Fernwärme, wie sie in einigen der eingangs genannten Schriften aus dem Stand der Technik beschrieben werden, zumeist ein Kernrohr aus Metall auf. In diesem Fall ist das Kernrohr der Rohrleitung selbst elektrisch leitend, während dies bei einem erfindungsgemäßen Kernrohr aus Kunststoff nicht der Fall ist. Die erfindungsgemäßen Rohrleitungen bestehen, wie dies bei Kunststoffrohren häufig der Fall ist, aus mehreren Schichten, die sich in ihren jeweiligen Werkstoffen und auch in ihrer Funktion für die Rohrleitung unterscheiden können. Bei einem erfindungsgemäßen Kunststoffrohr können mehrere Schichten jeweils aus Kunststoff bestehen und das Kunststoffrohr kann auch ausschließlich aus Kunststoff bestehen. Von der vorliegenden Erfindung umfasst sind aber auch Kunststoffrohrleitungen, bei denen einzelne Schichten elektrisch leitend sind und nicht oder nicht ausschließlich aus Kunststoff bestehen. Dies können beispielsweise metallische Barriereschichten sein, die zum Beispiel aus Aluminium bestehen können und für den Schutz gegen Chemikalien verwendet werden. Diese Barriereschichten haben häufig eine vergleichsweise geringe Schichtdicke und sind als so genannte Funktionsschichten, nicht aber als tragende Schichten eines Kunststoffrohres anzusehen. Dies können beispielsweise auch abrasionsresistente Schichten sein, bei denen Partikel aus unterschiedlichen, beispielsweise mineralischen oder metallischen Werkstoffen in die Schicht eingebettet werden, so dass sich auch deren Leitfähigkeit verändert. Diese beiden Beispiele sind erläuternd und nicht einschränkend zu verstehen und dienen dazu, zu verdeutlichen, was unter einem Rohr, welches "im Wesentlichen aus Kunststoff besteht, im Rahmen der vorliegenden Erfindung zu verstehen ist. Ein solches Rohr, welches in diesem Sinne als "im Wesentlichen aus Kunststoff" besteht, wird aufgrund des Materials des Kernrohrs und/oder der tragenden Rohrschichten in der Technik als Kunststoffrohr bezeichnet.

Die beiden elektrischen Leiter sind geeignet, als Ortungsdrähte eine Fehlerstelle bei Beschädigung der Rohrleitung zu detektieren und genau zu orten. Rohrleitungen dieser Art werden im Erdreich oder gegebenenfalls auch unter Wasser verlegt und sie bestehen in der Regel entweder aus mehreren Schichten aus Kunststoff oder es handelt sich um Rohre aus Verbundmaterialien mit Schichten aus Kunststoff und gegebenenfalls weiteren Materialien, beispielsweise dünnen metallischen Folien, die als Barriereschichten dienen, um das Austreten von Flüssigkeiten aus der Rohrleitung in das umgebende Erdreich zu verhindern. Derartige Rohrleitungen weisen im allgemeinen ein ein- oder mehrschichtiges Kernrohr aus Kunststoff auf, das eine tragende Schicht oder einen Schichtverbund bildet und beispielsweise aus Kunststoffen wie Polyolefinen oder dergleichen bestehen kann. Da die Rohrleitung in ihrem äußeren Randbereich erfahrungsgemäß besonderen mechanischen Belastungen unterliegt, insbesondere auch in den Fällen, in denen die Rohrleitung in einem grabenlosen Verlegeverfahren in das Erdreich eingezogen wird, ist das Kernrohr zumeist von einem Schutzmantel umgeben, der aus einem besonders verschleißfesten, abrasionsfesten Kunststoff mit hoher Beständigkeit gegen Risswachstum etc. besteht. Dieser Schutzmantel kann nach der Fertigung des Rohres auf das Kernrohr aufextrudiert werden oder alternativ auch bei der Herstellung des Kernrohrs durch Coextrusion aufgebracht werden. Das Aufextrudieren hat gewisse Vorteile, unter anderem da sich dann dieser Schutzmantel abschälen lässt, wenn zwei Rohrstränge einer solchen Rohrleitung miteinander verschweißt werden müssen.

Dieser Schutzmantel hat somit die Aufgabe, das Kernrohr und gegebenenfalls weitere innere Rohrschichten gegen mechanische, von außen einwirkende Einflüsse sowie Witterungseinflüsse zu schützen. Wenn eine Beschädigung dieses Schutzmantels auftritt, erhöht sich die Gefahr eines Schadens auch am Kernrohr, da dieses dann ungeschützt ist und weniger widerstandsfähig ist gegen mechanische Belastungen und Witterungseinflüsse ist, so dass die Gefahr einer Leckage besteht, durch die dann ein für die Umwelt schädliches Fluid, welches in der Rohrleitung transportiert wird, unkontrolliert in die Umgebung, d.h. in das Erdreich oder ein Gewässer gelangen kann. Daher ist es sehr wichtig, nicht nur sehr frühzeitig zu erfahren, wenn eine solche Leckage an der Rohrleitung auftritt, sondern diese auch möglichst genau lokalisieren zu können, da die Rohrleitung im Erdreich verlegt ist und daher eine Reparatur Grabungsarbeiten erfordert, um sich einen Zugang zu der Leckagestelle zu verschaffen. Da diese Erdarbeiten aufwändig sind, ist man naturgemäß bestrebt, diese auf ein Minimum zu beschränken, wozu ein genaues Lokalisieren der Leckagestelle erforderlich ist.

Die Erfahrung zeigt, dass das aus dem Stand der Technik bekannte Einextrudieren von elektrischen Leitern in den Kunststoff einer Schicht der Rohrleitung, sei es in das Kernrohr oder in äußere Schutzschichten, aufwändig und daher teuer ist. Es ist daher vorteilhaft, die elektrischen Leiter für die Ortung unter dem Schutzmantel, aber auf dem Umfang des Kernrohrs (also nicht in dem Kunststoff des Kernrohrs), zu verlegen. Dies ermöglicht bei der Herstellung zunächst die (quasi endlose) Extrusion des Kernrohrs in einer Extrusionslinie, danach die Aufbringung und gegebenenfalls Befestigung der elektrischen Leiter auf dem Kernrohrs und danach die Aufbringung des Schutzmantels, beispielsweise in einem erneuten Extrusionsvorgang durch Aufextrudieren, so dass der Schutzmantel die beiden elektrischen Leiter und auch den Kernrohrs überzieht und gleichzeitig die beiden elektrischen Leiter mechanisch in der mehrschichtigen Rohrleitung sicher fixiert. Die beiden elektrischen Leiter liegen dann also zwischen dem Kernrohr und dem Schutzmantel und sind zum einen durch den Schutzmantel gegen mechanische Einflüsse geschützt. Außerdem werden sie durch den Vorgang der Umhüllung von der Schutzmantelschicht so eng überzogen, dass sie absolut lagefixiert sind und keinen Bewegungsspielraum in der fertigen Rohrleitung haben.

Die beiden elektrischen Leiter können gemäß der Erfindung mit einer Gleichspannung beaufschlagt werden und wenn eine Leckage auftritt oder der äußere Schutzmantel der Rohrleitung fehlerhaft ist, kann man dies nicht nur messen und anzeigen, sondern man kann über eine Ohm'sche Widerstandsmessung auch diejenige Stelle, an der die Leckage aufgetreten ist, genau einmessen. Dies wird erfindungsgemäß dadurch möglich, dass man zwei elektrische Leiter als Ortungsdrähte verwendet. Der erste dieser beiden Leiter dient dabei quasi als Referenzleiter. Es wird bei Aufgabe einer Gleichspannung der jeweilige elektrische Widerstand beider Leiter mittels einer geeigneten Messvorrichtung gemessen und die Widerstandswerte beider Leiter werden durch die Messvorrichtung miteinander verglichen. Wenn nun eine Leckage an der Rohrleitung auftritt, ändert sich der Widerstand des zweiten Leiters, was die Messvorrichtung detektiert und woraus dann auf eine Leckage geschlossen werden kann.

Gemäß einer bevorzugten Weiterbildung der Erfindung umfasst ein zweiter elektrischer Leiter einen Draht mit einer elektrischen Isolierung, wobei die elektrische Isolierung an mehreren Stellen, jeweils in definierten Abständen voneinander durchbrochen, insbesondere perforiert ist. Wenn nun der Schutzmantel der Rohrleitung beschädigt ist, kann Feuchtigkeit aus dem Erdreich an die Leiter gelangen und auch direkt an den leitenden Draht des zweiten Drahts gelangen, da dessen Isolierung ja stellenweise perforiert ist. Infolgedessen ändert sich dann der gemessene Widerstandswert für den zweiten Draht, während derjenige des isolierten ersten Referenzdrahtes gleich bleibt. Aus der Messung des Widerstandswerts kann die Messvorrichtung auch ableiten, an welcher Stelle der Rohrleitung die Leckage aufgetreten ist, so dass eine genaue Ortung möglich ist. Es ist dann sehr einfach für einen Bautrupp, der sich direkt an die Stelle begeben kann, wo die Leckage der Rohrleitung vorliegt und dort die Reparatur mit vergleichsweise geringem Aufwand beim Freigraben der Rohrleitung vornehmen kann.

Gemäß einer bevorzugten Weiterbildung der Erfindung umfasst ein erster der beiden elektrischen Leiter beispielsweise einen Kupferdraht und ein zweiter elektrischer Leiter umfasst ein metallisches Material mit einem höheren spezifischen Widerstand als Kupferdraht. Beispielsweise kann man für den zweiten elektrischen Leiter einen Draht aus einer Chrom-Nickel-Legierung oder anderen geeigneten Legierungen verwenden.

Gemäß einer bevorzugten Weiterbildung der Erfindung umfasst der erste elektrische Leiter, also beispielsweise der Referenzleiter, einen Draht mit einer durchgehenden elektrischen Isolierung. Der Widerstand dieses Referenzleiters bleibt somit gleich, während sich bei auftretender Feuchtigkeit der Widerstand des zweiten elektrischen Leiters ändert. Vorteilhaft bei der erfindungsgemäßen Lösung ist, dass bereits eine Beschädigung der äußeren Schutzmantelschicht der Rohrleitung ausreicht, damit das Detektionssystem anspricht, denn bereits dann kann Feuchtigkeit aus dem umgebenden Erdreich an den zweiten elektrischen Leiter gelangen, dessen Isolierung nicht durchgehend ist. Die innere Schicht der Rohrleitung, das heißt das Kernrohr ist dann in der Regel noch intakt, es tritt somit keine Flüssigkeit aus der Rohrleitung in die Umgebung aus. Somit liegt noch keine Leckage der Rohrleitung im eigentlichen Sinne vor, sondern nur eine Beschädigung des äußeren Schutzmantels. Die erfindungsgemäße Einrichtung detektiert somit diesen Schaden an der Rohrleitung, bevor ein Umweltschaden entsteht. Es ist somit anders als bei bekannten Systemen nicht so, dass die Detektion über aus der Rohrleitung selbst austretende Flüssigkeit erfolgen muss.

Gemäß einer bevorzugten Weiterbildung der Erfindung ist vorgesehen, dass die elektrischen Leiter innerhalb der Rohrleitung etwa in Längsrichtung jeweils hin und zurück verlaufen. Man verwendet bei dieser Variante eine Fühlerader, die dem oben erwähnten zweiten Leiter entspricht und daher mit einer teilweise durchbrochenen Isolierung versehen ist, und eine Rückführader, die mit einer vollständigen Isolierung versehen ist. In dem Fall, dass es sich um eine zumindest teilweise elektrisch leitende Rohrleitung handelt, beispielsweise eine Rohrleitung aus Kunststoff mit wenigstens einer metallischen Schicht, dann kann man mit Fühlerader und einer Rückführader, das heißt im Prinzip zwei sich am Rohr in Längsrichtung hin und zurück erstreckenden Leitungen die Messung vornehmen, da die Rohrleitung selbst die Funktion eines dritten Anschlusses übernimmt.

Sofern es sich jedoch um ein nicht elektrisch leitendes Rohrleitungssystem handelt, ist es bevorzugt so, dass man eine Fühlerader mit Rückführader und zusätzlich noch eine Referenzader mit Rückführader verwendet, das heißt es handelt sich dann um insgesamt vier Leitungen, die zwei Messschleifen bilden und jeweils paarweise an der Rohrleitung über die zu messende Wegstrecke hin und zurück geführt sind. Mit dieser Anordnung von vier Leitungen kann man auch bei einer reinen Kunststoffrohrleitung über Widerstandsmessungen den Ort der Fehlerstelle genau bestimmen.

Gemäß einer bevorzugten Weiterbildung der Erfindung sind der erste elektrische Leiter mit seiner Isolierung und der zweite elektrische Leiter mit seiner durchbrochenen Isolierung oder sofern vorhanden mehr als zwei funktional zusammenwirkende Leiter (beispielsweise vier Leitungen wie oben erwähnt) eines Messsystems jeweils mit einer gemeinsamen Umhüllung umgeben, so dass sie eine Leitereinheit mit Umhüllung nach Art eines Kabels bilden. Diese Umhüllung hat insbesondere fertigungstechnische Vorteile, da sich so eine Einheit ergibt, die sich bei der Fertigung des Kunststoffrohres in einer Extrusionslinie handhaben lässt. Man kann beispielsweise so vorgehen, dass man zunächst das Kernrohr über eine erste Extrusionsvorrichtung mit Extruderdüse extrudiert, dann die Leitereinheit als Kabel beispielsweise von einer Rolle abwickelt und einer zweiten Extrusionsvorrichtung mit Extruderdüse zuführt, in der der Schutzmantel auf das Kernrohr aufextrudiert wird, derart, dass das Kabel dann auf dem Kernrohr liegt und von der Schutzmantelschicht beim Aufextrudieren mit überzogen wird.

Gemäß einer bevorzugten Weiterbildung der Erfindung ist es von Vorteil, wenn die Anordnung zwei oder mehrere über den Umfang der Rohrleitung jeweils mit Abstand zueinander angeordnete und jeweils etwa in Längsrichtung der Rohrleitung unter dem Schutzmantel verlaufend angeordnete Einheiten von wenigstens jeweils zwei elektrischen Leitern umfasst. Diese Variante ist insbesondere bei Rohrleitungen mit einem größeren Rohrdurchmesser zu empfehlen. Bei diesen kann es nämlich vorkommen, dass es bei einer Beschädigung der Rohrleitung verhältnismäßig lange dauert, bis Feuchtigkeit aus dem Erdreich an die Leiter gelangt, was auch von der jeweiligen Lage der Rohrleitung nach der Verlegung abhängt, beispielsweise, ob sich die Leiter in einem oberen, seitlichen oder unteren Umfangsbereich der Rohrleitung befinden. Sind jedoch über den Umfang verteilt mehrere Einheiten von Leitungen vorhanden, über die detektiert wird, dann wird mit hoher Sicherheit eine dieser Einheiten ansprechen und die Reaktion auf eine Beschädigung erfolgt in jedem Fall rascher. Rohrleitungen mit größerem Rohrdurchmesser im Sinne dieser Variante der Erfindung sind beispielsweise solche mit einem Rohrdurchmesser von mehr als 10 cm. Der Rohrdurchmesser von Rohrleitungen aus Kunststoff dieser Art kann beispielsweise variieren von wenigen Zentimetern bis zu einem Meter oder mehreren Metern Durchmesser. Hier gibt es bei der Anwendbarkeit der erfindungsgemäßen Lösung prinzipiell keine Einschränkungen, außer dass es empfehlenswert ist, bei Rohrleitungen mit größeren Durchmesser am Umfang mehrere beabstandete Leitereinheiten für die Detektion eines Schadens an der Rohrleitung vorzusehen.

Gegenstand der vorliegenden Erfindung ist weiterhin ein Verfahren zur Überwachung einer Rohrleitung auf Beschädigung oder Leckagen, wobei innerhalb der Rohrleitung auf einem Kernrohr und unterhalb einer äußeren Schutzmantelschicht wenigstens zwei elektrische Leiter angeordnet sind, welche aus Materialien mit jeweils unterschiedlichen spezifischen elektrischen Widerständen bestehen, wobei die elektrischen Leiter durch die äußere Schutzmantelschicht zur Umgebung hin elektrisch isoliert sind, wobei mittels einer Spannungsquelle beide elektrischen Leiter mit einer Spannung beaufschlagt werden und mittels einer Messvorrichtung ein Stromfluss durch die elektrischen Leiter und/oder deren jeweiliger elektrischer Widerstand gemessen wird und wobei bei einer Abweichung der gemessenen Werte von einem Sollwert eine Beschädigung der Rohrleitung detektiert wird.

Vorzugsweise ist bei diesem Verfahren ein erster elektrischer Leiter vollständig elektrisch isoliert und ein zweiter elektrischer Leiter weist eine in bestimmten Bereichen mit regelmäßigen Abständen durchbrochene elektrische Isolierung auf und über die gemessenen Widerstands- und/oder Stromflusswerte wird die Stelle, an der die Beschädigung der Rohrleitung vorliegt, geortet.

Vorzugsweise wird bei dem vorgenannten Verfahren eine Anordnung verwendet, wie sie hierin zuvor beschrieben wurde.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen:
Figur 1 eine schematisch vereinfachte stirnseitige Ansicht einer erfindungsgemäßen Anordnung;
Figur 2 eine Ansicht eines Längsschnitts durch eine erfindungsgemäße Anordnung;
Figur 3 eine Ansicht des ersten Leiters, welcher in einer erfindungsgemäßen Rohrleitung verlegt ist;
Figur 4 eine Ansicht des zweiten Leiters, welcher in einer erfindungsgemäßen Rohrleitung verlegt ist;
Figur 5 eine schematische Darstellung zur Erläuterung der Ortung der schadhaften Stelle in einer mindestens teilweise elektrisch leitenden Rohrleitung;
Figur 6 eine schematische Darstellung einer alternativen Variante der Erfindung, bei der die Widerstandsmessung bei einem nicht leitenden Rohrsystem erfolgt.

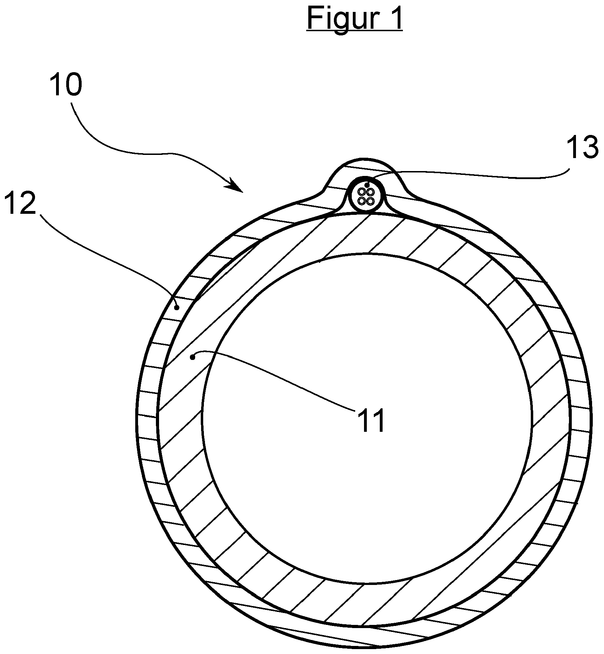

Nachfolgend wird zunächst auf die Figur 1 Bezug genommen und anhand dieser wird der grundsätzliche Aufbau einer Rohrleitung 10 erläutert, die nach dem erfindungsgemäßen Prinzip auf Beschädigung überwacht wird. Diese Rohrleitung 10 umfasst zunächst ein inneres tragendes Kernrohr 11 aus Kunststoff mit einem Lumen, durch das Medium fließt. Um dieses Kernrohr 11 im äußeren Bereich gegen mechanische Einflüsse zu schützen, ist das Kernrohr 11 ringsum von einem Schutzmantel 12 umgeben, welcher aus einem Kunststoffmaterial mit einer höheren mechanischen Belastbarkeit, höherer Abriebfestigkeit etc., besteht. Dieser äußere Schutzmantel 12 wird beispielsweise auf das Kernrohr 11 aufextrudiert. Dabei umgibt der äußere Schutzmantel 12 das Kernrohr nahezu überall spaltfrei, wobei jedoch in einem odere mehreren Bereichen des Umfangs eine Einheit von Messleitungen 13 in Form eines Kabels oder dergleichen verlegt ist. Diese Einheit von Messleitungen 13 wird für die Widerstandsmessung zur Detektion und Ortung von Schadstellen und Leckagen gemäß der Erfindung benutzt. Aus Gründen der einfacheren Handhabbarkeit bei der Herstellung der Rohrleitung 10 sind diese mehreren Messleitungen in der Regel in einem Kabel zu einer Einheit 13 zusammengefasst, was aber für die Funktion nicht unbedingt notwendig ist.
Die genannte Einheit von Messleitungen 13 befindet sich wie aus Figur 1 erkennbar ist unterhalb der äußeren Umhüllung der Rohrleitung durch den Schutzmantel 12, so dass die Einheit auch durch den Schutzmantel gegen mechanische Einflüsse geschützt ist, wobei jedoch bei einer Beschädigung des Schutzmantels Feuchtigkeit von außen aus dem Erdreich an die Messleitungen gelangen kann. Andererseits sind die Messleitungen 13 auf dem Kernrohr 11 verlegt, was die Herstellung der Rohrleitung 10 vereinfacht, da man dann zunächst das Kernrohr 11 extrudieren kann, danach die Messleitungen 13 an diesem anbringt und dann den Schutzmantel 12 so aufextrudiert, dass dieser sowohl das Kernrohr 11 als auch die Messleitungen 13 überzieht.

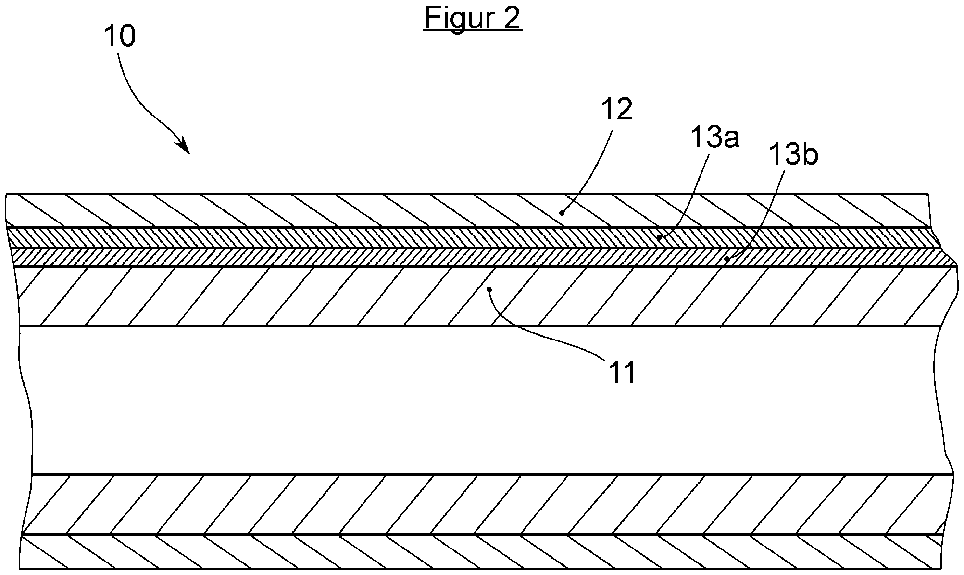

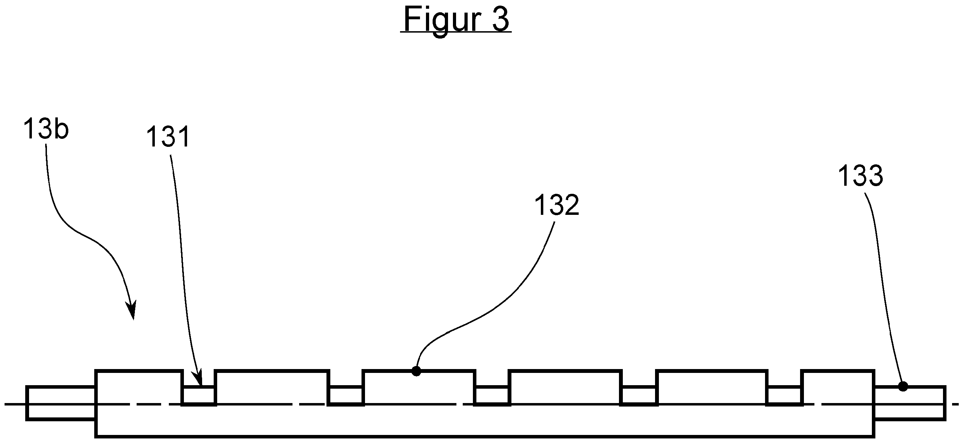

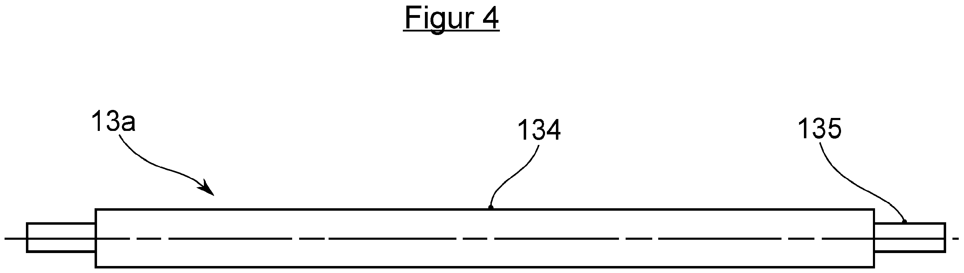

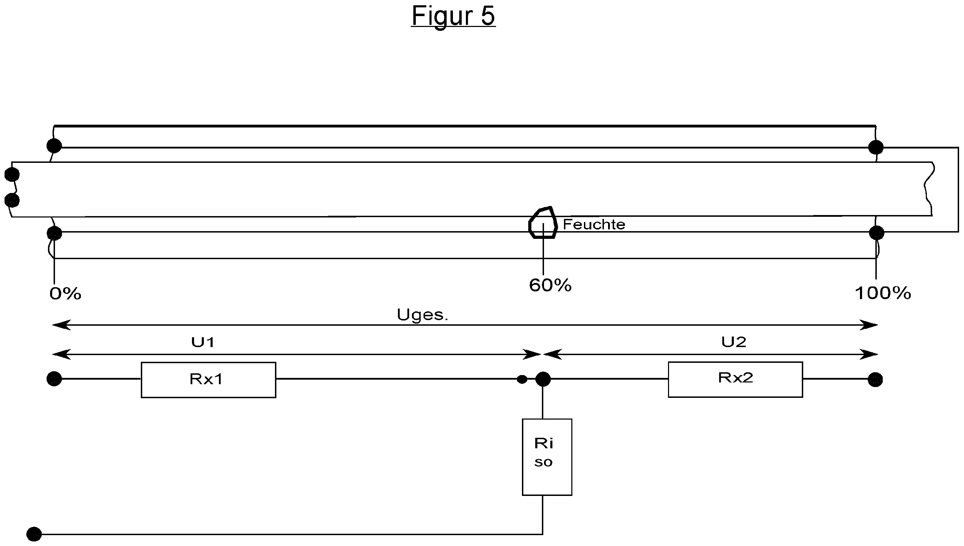

Figur 2 zeigt einen vereinfachten Längsschnitt einer in Figur 1 von der Stirnseite her gezeigten Rohrleitung 10. Man erkennt zum einen das innere Kernrohr 11 sowie den auf dieses innere Kernrohr 11 aufgebrachten äußeren Schutzmantel 12. Weiterhin ist in Figur 2 erkennbar, dass die Einheit von Messleitungen 13 mindestens zwei Leiter aufweist, nämlich einen ersten vollständig isolierten Leiter 13 a aus einem vergleichsweise niederohmigen Draht wie Kupfer oder dergleichen und einen zweiten nur teilweise isolierten Leiter 13 b aus einem Draht aus einem Material mit einem höheren spezifischen Widerstand als der erste Leiter 13 a, beispielsweise aus einer Chrom-Nickel-Legierung. Dieser zweite elektrische Leiter 13 b ist die eigentliche Messleitung und wird hierin nachfolgend auch als Fühlerader bezeichnet. Der erste elektrische Leiter 13 a dient als Referenzleitung und wird hierin nachfolgend auch als Referenzader bezeichnet. Sowohl die Fühlerader 13 b als auch die Referenzader 13 a haben vorzugsweise zusätzlich jeweils noch eine Rückführader, die in der schematischen Zeichnung gemäß Figur 2 zwecks Vereinfachung nicht dargestellt ist. Insgesamt weist daher eine Einheit von Messleitungen jeweils vier Leitungsadern auf, wovon jedoch für die Messfunktion in erster Linie die Fühlerader 13 b und die Referenzader 13 a wichtig sind. Nähere Einzelheiten betreffend den Aufbau und die Funktionsweise der Messleitungen werden später noch unter Bezugnahme auf die vergrößerten Detailansichten gemäß den Figuren 3 und 4 sowie die schematische Darstellung von Figur 5 näher beschrieben.

Figur 3 zeigt in der Seitenansicht das Detail einer einzelnen Messleitung oder Fühlerader 13 b. Diese umfasst eine elektrische Isolierung 132 bestehend aus einem geeigneten Kunststoff wie beispielsweise PTFE. Weiterhin weist die Fühlerader 13 b einen innenliegenden Draht 133 aus einem vergleichsweise hochohmigen Metall, beispielsweise aus einer Chrom-Nickel-Legierung NiCr 8020 auf, die beispielsweise einen Durchmesser von ca. 0,5 mm hat. Die elektrische Isolierung 132 ist wie man in Figur 3 an mehreren Stellen jeweils in regelmäßigen Abständen voneinander durch Perforationen 131 unterbrochen, so dass im Falle einer Beschädigung des äußeren Schutzmantels, Feuchtigkeit aus dem die Rohrleitung 10 umgebenden Erdreich direkt an den innenliegenden Draht 133 der Fühlerader gelangen kann, dessen Widerstand erfindungsgemäß gemessen wird.

Figur 4 zeigt in der Seitenansicht im Detail eine Rückführader 13 a, die hierin auch als erster Leiter bezeichnet wird. Diese Rückführader 13 a umfasst ebenfalls eine elektrische Isolierung 134 bestehend aus einem geeigneten Kunststoff und weist außerdem einen innenliegenden Draht 135 auf, der in diesem Fall jedoch aus einem metallischen Material mit vergleichsweise guter elektrischer Leitfähigkeit besteht, das heißt einem niederohmigen Metall wie beispielsweise aus einem Kupferdraht. Im Gegensatz zu der oben beschriebenen Fühlerader 13 b hat die Rückführader 13 a eine elektrische Isolierung 134, die den Draht vollständig isoliert, hier gibt es somit keine Durchbrechungen in der Isolierung, so dass gegebenenfalls eindringende Feuchtigkeit bei einer Beschädigung der Rohrleitung 10 den Draht 135 der Rückführader 13 a nicht benetzen kann.

Weitere Einzelheiten des Aufbaus und der Funktionsweise der erfindungsgemäßen Messung des Widerstands und der Leckortung werden nun nachfolgend unter Bezugnahme auf die schematische Darstellung gemäß Figur 5 näher erläutert. In Figur 5 ist eine Variante der Erfindung dargestellt, bei der die Rohrleitung mindestens teilweise, das heißt beispielsweise in einzelnen Schichten, elektrisch leitend ist. Die Überwachung wird durch eine Ohmsche Widerstandsmessung zwischen der perforierten Fühlerader 13 b und der Rohrleitung 10, in der das Medium fließt, ermöglicht. Da bei einer intakten Rohrleitung 10 mit einem Schutzmantel die beiden Leiter elektrisch isoliert sind, besteht zwischen der Fühlerader 13 b und dem Kernrohr 11 ein hoher Isolationswiderstand. Wenn nun bei einer Beschädigung der Rohrleitung 10 der Schutzmantel 12 beschädigt wird, kann durch die Perforationen 131 in der Isolierung 132 der Fühlerader 13 b Feuchtigkeit eindringen und der Widerstand zwischen der Rohrleitung (Medienrohr) und der Fühlerader 13 b wird abgesenkt. Die Ortung der Schadstelle kann nun nach dem Prinzip des unbelasteten Spannungsteilers durchgeführt werden.

Zwischen Rohranfang und Rohrende bildet der Widerstandsdraht der Fühlerader 13 b einen Längswiderstand (Schleifenwiderstand Rges), dessen Größe letztendlich durch die Rohrlänge und den darin verbauten Drahtwiderstand bestimmt wird. Eine Schadstelle im Rohrsystem stellt eine Verbindung zwischen dem Fühlerader und dem Medienrohr dar und teilt den Schleifenwiderstand in die Abschnitte R(x1) vom Rohrbeginn (0% der Länge) bis zum Fehler und dem Abschnitt R(x2) vom Fehler bis zum Rohrende (100 % der Länge). Die beiden Teilwiderstände R(x1) und R(x2) sind direkt abhängig vom Ort der Durchfeuchtung. Legt man eine Spannung an die Fühlerschleife 13 b an, so überträgt im Fehlerfall die leitende Feuchtigkeit einen vom Ort abhängigen Spannungsteilwert auf das Medienrohr. Elektrisch gesehen übernimmt das Medienrohr die Funktion des dritten Anschlusses, ähnlich dem Schleiferanschluss eines Potentiometers. Die gemessene Teilspannung (x% der Gesamtspannung) ist direkt proportional zum Ort der Durchfeuchtung (x% der Gesamtlänge).

In der Praxis findet man jedoch kaum idealisierte Verhältnisse vor, sondern hat es mit zusätzlichen Störkomponenten zu tun. Hierzu zählt unter anderem die Elementspannung (Ux), die sich aufgrund der verwendeten Metalle (beispielsweise Chrom-Nickel-Draht, Stahlrohr) als chemisches Spannungselement ausbildet. Die meisten der heute verwendeten Ortungsmessgeräte können jedoch derartige Störkomponenten relativ gut kompensieren, so dass bei hochohmigen Fehlern im MOhm-Bereich sehr gute Ortungsergebnisses erzielt werden. Aufgrund des physikalischen Prinzips des unbelasteten Spannungsteilers können nur einzelne Feuchtefehler lokalisiert werden. Mehrfachfehler sind bei dem hier beschriebenen System nicht ortbar. Hier kann bei passender Gerätetechnik der erste Fehlerort gespeichert werden, um dann von diesem aus zu weiteren Fehlern zu gelangen.

Die Vorteile der erfindungsgemäßen Lösung liegen darin, dass das gesamte Rohrsystem überwacht werden kann. Es werden keine elektronischen Komponenten benötigt. Beispielsweise durch Quetschhülsen kann eine einfache Muffenmontage erfolgen. Die Fühlerschleifenüberwachung kann über das gesamte Netz erfolgen. Die Ortung ist schon bei kleinen Schadstellen möglich und es besteht eine hohe Ansprechempfindlichkeit. Es ist eine sichere und einfache Ortung von Erstfehlern möglich. Die Rohrlänge kann einfach durch Schleifenmessung bestimmt werden.

Die Überprüfung einer erfindungsgemäßen Anordnung mit einem NiCr-Draht-System als Rückführader 13 a kann beispielsweise über eine Durchgangsmessung der Drahtschleife erfolgen, wobei der Wert beispielsweise zwischen 0,1 und 10 kOhm liegt. Der Messwert muss umgerechnet mit der Trassenlänge übereinstimmen. Die Werte im Vor- und Rücklauf sollten annähernd gleich sein. Zwischen der Drahtschleife und dem Medienrohr erfolgt außerdem eine Isolationsmessung, wobei ein hochohmiger Wert im Bereich von beispielsweise mehr als 10 Mohm pro 1000 m Rohrleitung gemessen wird. Die Messungen werden vorzugsweise mit einem speziellen Isolationsmessgerät durchgeführt, beispielsweise LANCIER Monitoring "PipeCheck" oder isoplus "IPS-HST" oder dergleichen.

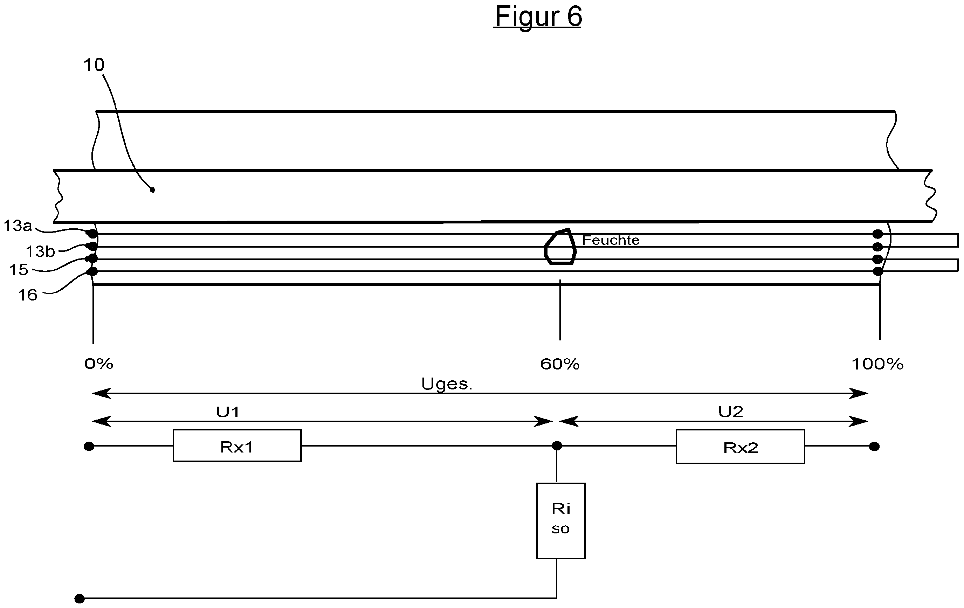

Nachfolgend wird unter Bezugnahme auf die Figur 6 eine alternative Variante der vorliegenden Erfindung beschrieben. Im Prinzip ist die Funktionsweise hier ähnlich wie bei der zuvor anhand von Figur 5 beschriebenen Variante, allerdings mit dem Unterschied, dass es sich bei dem Beispiel von Figur 6 um eine nicht leitende Rohrleitung handelt und daher das sonst leitende Medienrohr durch eine leitfähige Referenzader 15 ersetzt wird. Die Fühlerader 13 b ist mit einer in Gegenrichtung entlang der Rohrleitung 10 geführten Rückführader 13 a zu einer ersten Messschleife verbunden. Eine zweite Messschleife wird durch eine Referenzader 15 gebildet, welche ebenfalls mit einer in Gegenrichtung entlang der Rohrleitung 10 geführten Rückführader 16 verbunden ist. Die leitfähige Referenzader 15 kann beispielsweise aus einer Kupferader bestehen, die insbesondere galvanisch verzinnt und mit einem Vlies bebandet sein kann. Um die Durchgängigkeit der Referenzader 15 zu prüfen, wird diese mit einer isolierten Rückführader 16 zu einer Messschleife verbunden, die von einer Messvorrichtung auf Durchgängigkeit überprüft werden kann.

Somit ergeben sich bei dieser Variante zwei Messschleifen, die erste Messschleife aus Fühlerader 13 a und Rückführader 13 b und die zweite Messschleife aus Referenzader 15 und Rückführader 16. Es sind somit insgesamt vier Leitungsadern vorhanden, die an der Rohrleitung, vorzugsweise zwischen Kernrohr 11 und Schutzmantel 12 verlegt werden können. Wenn nun eine Beschädigung des Schutzmantels 12 eintritt kommt die Fühlerader 13 b mit Feuchtigkeit aus dem Erdreich in Kontakt und der Widerstand in der Messschleife aus 13 a und 13 b sinkt. Ebenso kommt auch die Referenzader 15 mit Feuchtigkeit aus dem Erdreich in Kontakt. Wenn man an beide Messschleifen eine Spannung anlegt, kann man nun wieder wie oben bereits erläutert wurde die jeweiligen Widerstände R(x1) vom Beginn der Rohrleitung bis zur Fehlerstelle und R(x2) von der Fehlerstelle bis zum Rohrende bestimmen und aus den Teilwiderstände dann bestimmen, an welchem Punkt der Rohrleitung sich die Fehlerstelle befindet. In der Zeichnung Figur 6 ist beispielhaft ein Wert von 60 % angenommen, das heißt die Fehlerstelle befindet sich zum Beispiel an einer Stelle, deren Entfernung vom Beginn der Rohrleitung 60 % der Gesamtlänge der Rohrleitung, an der entlang sich die Messleitungen erstrecken, entspricht.

### Bezugszeichenliste

- 10: Rohrleitung
- 11: Kernrohr
- 13: Einheit von Messleitungen
- 12: Schutzmantel
- 13 a: erster elektrischer Leiter
- 13 b: zweiter elektrischer Leiter/Fühlerader
- 131: Perforationen
- 132: Isolierung
- 133: innenliegender Draht
- 134: elektrische Isolierung
- 135: innenliegender Draht
- 15: Referenzander
- 16: Rückführader

## Patentansprüche

1. Anordnung umfassend eine Rohrleitung (10) mit einer Einrichtung zur Überwachung der Rohrleitung auf Beschädigung oder Leckagen, umfassend einen ersten sich in der Rohrleitung etwa in Längsrichtung erstreckenden elektrischen Leiter (13 a) und einen zweiten sich in der Rohrleitung etwa in Längsrichtung erstreckenden elektrischen Leiter (13 b), eine äußere Schutzmantelschicht (12), die die elektrischen Leiter zur Umgebung hin elektrisch isoliert, eine Spannungsquelle, um die elektrischen Leiter mit einer Spannung zu beaufschlagen sowie eine Messvorrichtung, mittels derer ein Stromfluss durch die elektrischen Leiter und/oder deren elektrischer Widerstand messbar ist, wobei innerhalb der Rohrleitung wenigstens zwei elektrische Leiter (13 a, 13 b) angeordnet sind, welche aus Materialien mit jeweils unterschiedlichen spezifischen elektrischen Widerständen bestehen, **dadurch gekennzeichnet, dass** ein erster elektrischer Leiter (13 a) einen Draht mit einer durchgehenden elektrischen Isolierung umfasst und ein zweiter elektrischer Leiter (13 b) einen Draht (133) mit einer elektrischen Isolierung (132) umfasst, wobei die elektrische Isolierung (132) des zweiten Leiters (13 b) an mehreren Stellen (131), jeweils in definierten Abständen voneinander durchbrochen, insbesondere perforiert ist und dass die Rohrleitung (10) ein Kernrohr (11) mit mindestens einer tragenden Schicht aus Kunststoff umfasst.

2. Anordnung nach Anspruch 1, **dadurch gekennzeichnet, dass** ein erster (13 a) der beiden elektrischen Leiter einen Kupferdraht umfasst und ein zweiter elektrischer Leiter (13 b) ein metallisches Material mit einem höheren spezifischen Widerstand als Kupferdraht umfasst.

3. Anordnung nach Anspruch 1 oder 2, **dadurch gekennzeichnet, dass** der zweite elektrische Leiter (13 b) einen Draht aus einer Chrom-Nickel-Legierung umfasst.

4. Anordnung nach einem der Ansprüche 1 bis 3, **dadurch gekennzeichnet, dass** der zweite elektrische Leiter (13 b) in eine Messschleife eingebunden ist und vorzugsweise mit einer isolierten Rückführader (13 a) verbunden ist.

5. Anordnung nach Anspruch 4, **dadurch gekennzeichnet, dass** diese eine erste Messschleife umfasst mit einer Fühlerader, der die Funktion des zweiten elektrischen Leiters (13 b) zugewiesen ist, mit einer mit der Fühlerader verbundenen Rückführader, der die Funktion des ersten elektrischen Leiters (13 a) zugewiesen ist, wobei die Anordnung eine zweite Messschleife umfasst mit einer Referenzader (15) und einer mit dieser Referenzader verbundenen Rückführader (16), wobei mittels der Messvorrichtung jeweils der elektrische Widerstand von einem Anfangspunkt an der Rohrleitung (10) bis zu einer Fehlerstelle, an der die Beschädigung vorliegt, sowie der elektrische Widerstand von der Fehlerstelle bis zu einem Endpunkt an der Rohrleitung (10) bestimmt werden und anhand dieser Messwerte die Fehlerstelle geortet wird.

6. Anordnung nach einem der Ansprüche 1 bis 5, **dadurch gekennzeichnet, dass** die Rohrleitung (10) mindestens eine äußere Schutzmantelschicht (12) umfasst, welche das Kernrohr (11) umhüllt, wobei diese äußere Schutzmantelschicht (12) auch die wenigstens zwei elektrischen Leiter (13 a, 13 b) umhüllt.

7. Anordnung nach Anspruch 6, **dadurch gekennzeichnet, dass** die wenigstens zwei elektrischen Leiter (13 a, 13 b) außen auf dem Umfang des Kernrohrs (11) verlegt sind und unterhalb der äußeren Schutzmantelschicht (12) verlaufen.

8. Anordnung nach einem der Ansprüche 1 bis 7, **dadurch gekennzeichnet, dass** die wenigstens zwei elektrischen Leiter (13 a, 13 b) permanent von einer elektrischen Gleichspannungsquelle beaufschlagt sind.

9. Anordnung nach einem der Ansprüche 1 bis 8, **dadurch gekennzeichnet, dass** diese zwei oder mehrere über den Umfang der Rohrleitung (10) jeweils mit Abstand zueinander angeordnete und jeweils etwa in Längsrichtung der Rohrleitung unter dem Schutzmantel (12) verlaufend angeordneten Einheiten von wenigstens jeweils zwei elektrischen Leitern (13 a, 13 b) umfasst.

10. Verfahren zur Überwachung einer Rohrleitung auf Beschädigung oder Leckagen, wobei innerhalb der Rohrleitung (10) auf einem Kernrohr (11) und unterhalb einer äußeren Schutzmantelschicht (12) wenigstens zwei elektrische Leiter (13 a, 13 b) angeordnet sind, welche aus Materialien mit jeweils unterschiedlichen spezifischen elektrischen Widerständen bestehen, wobei die elektrischen Leiter (13 a, 13 b) durch die äußere Schutzmantelschicht (12) zur Umgebung hin elektrisch isoliert sind, wobei mittels einer Spannungsquelle beide elektrischen Leiter mit einer Spannung beaufschlagt werden und mittels einer Messvorrichtung ein Stromfluss durch die elektrischen Leiter und/oder deren jeweiliger elektrischer Widerstand gemessen wird und wobei bei einer Abweichung der gemessenen Werte von einem Sollwert eine Beschädigung der Rohrleitung (10) detektiert wird.

11. Verfahren nach Anspruch 10, **dadurch gekennzeichnet, dass** ein erster elektrischer Leiter (13 a) vollständig elektrisch isoliert ist und ein zweiter elektrischer Leiter (13 b) eine in bestimmten Bereichen mit regelmäßigen Abständen durchbrochene elektrische Isolierung aufweist und über die gemessenen Widerstands- und/oder Stromflusswerte die Stelle, an der die Beschädigung der Rohrleitung vorliegt, geortet wird.

12. Verfahren nach einem der Ansprüche 10 oder 11, **dadurch gekennzeichnet, dass** bei diesem Verfahren eine Anordnung gemäß einem der Ansprüche 1 bis 9 verwendet wird.
